# EUROPÄISCHE PATENTSCHRIFT

(11) **EP 2 164 120 B1**
(45) Veröffentlichungstag und Bekanntmachung des Hinweises auf die Patenterteilung: **03.07.2013**
(21) Anmeldenummer: 08015917.1
(22) Anmeldetag: 10.09.2008
(51) Int. Cl.: H02N 2/00, H02N 2/02

(54) **Ultraschallmotor mit einem Ultraschallaktor in Form eines Teilhohlzylinders**
Ultrasonic motor with an ultrasonic actuator in the form of a hollow partial cylinder
Moteur à ultrasons doté d'un réacteur à ultrasons en forme de cylindre partielle creux

(43) Veröffentlichungstag der Anmeldung: 17.03.2010
(73) Patentinhaber: Physik Instrumente (PI) GmbH & Co. KG, 76228 Karlsruhe (DE)
(72) Erfinder: Wischnewskij, Alexej, 76744 Wörth (DE); Wischnewskiy, Wladimir, 76337 Waldbronn (DE)

(56) Entgegenhaltungen:
- WO-A-2004/064170
- WO-A-2006/050759
- DE-A1- 10 154 526

## Beschreibung

Die Erfindung betrifft einen Ultraschallmotor mit einem Ultraschallaktor, der ein Piezoelement in Form eines Teilhohlzylinders aufweist, wobei der Ultraschallaktor zwei Generatoren für die Erzeugung einer Ultraschallwelle und an diesem angeordnete Friktionselemente oder Friktionsschichten umfasst, und der Ultraschallmotor darüber hinaus eine elektrische Erregervorrichtung zur elektrischen Anregung der Generatoren aufweist.

Derartige Ultraschallmotoren sind beispielsweise für präzise elektrische Linearantriebe verwendbar. Sie können in miniaturisierten Objektiven von Fotoapparaten und in anderen optischen Miniatureinrichtungen eingesetzt werden. Außerdem können solche Motoren für eine Zweikoordinatenbewegung, beispielsweise in Mikrorobotern oder in anderen ähnlichen Vorrichtungen, Verwendung finden.

Die WO 2006/050759 A1 beschreibt einen linearen piezoelektrischen Ultraschallmotor mit einem Ultraschalloszillator in Form einer piezoelektrischen Platte oder eines Teils einer Zylinderschale mit Generatoren akustischer Schwingungen sowie mit einem in Friktionswirkung mit einem anzutreibenden Element stehenden Friktionselement, wobei das Friktionselement an einer Längsstirnfläche bzw. einer Umfangsstirnfläche angeordnet ist.

Aus der US 5,872,418 ist ein piezoelektrischer Ultraschallmotor bekannt, dessen Ultraschallaktor als Hohlzylinder ausgeführt ist und in dem eine zylindrische akustische Laufwelle erzeugt wird. Das zu bewegende Element dieser Motoren befindet sich in Anlage mit der Stirnseitenoberfläche des hohlzylindrischen Ultraschallaktors, wodurch eine große Kontaktfläche zwischen Aktor und zu bewegendem Element resultiert und sich somit eine relativ hohe Antriebskraft des Motors ergibt. Nachteilig bei dem aus der US 5,872,418 bekannten Motor ist sein auf Rotationsantriebsbewegungen begrenztes Einsatzspektrum.

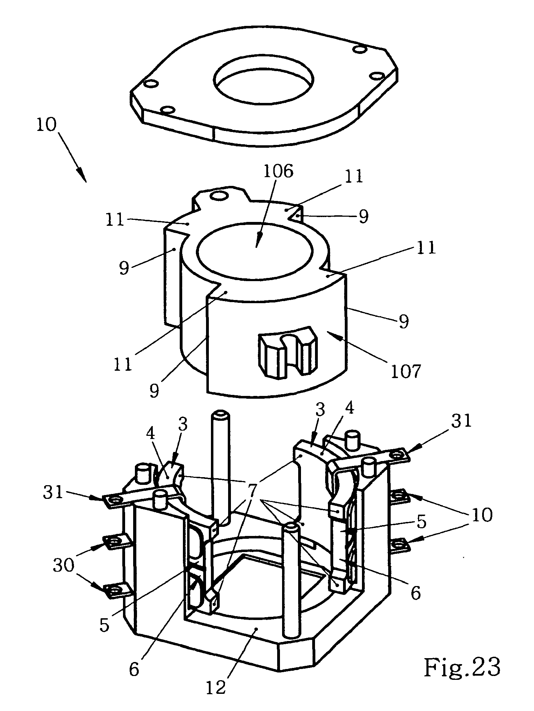

Weiterhin ist aus der US 6,765,335 ein Ultraschallmotor bekannt, dessen Ultraschallaktor als Teil eines Hohlzylinders ausgeführt ist (Fig. 23 und 43). Dieser Motor beschränkt sich ebenfalls auf Rotationsantriebsbewegungen. Hier steht der Ultraschallaktor mit dem zu bewegenden Element lediglich über ein Friktionselement in Kontakt, wobei die Kontaktfläche zwischen Friktionselement und zu bewegendem Element gering ist. Dies verringert die Antriebskraft des Motors, wodurch es ist nicht möglich ist, den Ultraschallaktor im erforderlichen Umfang zu belasten, um aus ihm Energie abzuleiten. Bei Belastung des Motors kommt es zu einer Erwärmung des Aktors. Besagte Erwärmung hat jedoch eine Instabilität des Motors zur Folge. Zudem verschiebt sich der Aktor bei Belastung des Motors geringfügig, was die Positioniergenauigkeit verschlechtert. Insgesamt resultiert aus der Erwärmung des Aktors und seiner mechanische Instabilität eine Verschlechterung der Betriebssicherheit des Motors.

Die Aufgabe der Erfindung besteht deshalb darin, einen Ultraschallmotor bereitzustellen, der gegenüber dem dargestellten Stand der Technik bei höherer Antriebs- oder Zugkraft eine geringere Erwärmung des Ultraschallaktors aufweist, der eine erhöhte Betriebsstabilität und mechanische Stabilität besitzt, und der eine höhere Positioniergenauigkeit und Zuverlässigkeit zeigt bei gleichzeitiger Erweiterung seiner Einsatzmöglichkeiten.

Diese Aufgabe wird erfindungsgemäß gelöst durch einen Ultraschallmotor nach Anspruch 1. Vorteilhafte Weiterbildungen des erfindungsgemäßen Ultraschallmotors sind in den Unteransprüche angegeben.

Durch die erfindungsgemäße Verwendung mehrerer Friktionselemente bzw. von Friktionsschichten auf den Umfangsstirnflächen des Teilhohlzylinders und der speziellen Geometrie des Teilhohlzylinders, gekennzeichnet durch innerhalb enger Grenzen liegender Verhältnisse von mittlerer Umfangslänge L zu Höhe H (UH zwischen 1,3 und 1,8 oder UH zwischen 8,8 und 9,5), ist es im Vergleich zu den aus dem Stand der Technik bekannten Ultraschallmotoren möglich, die Zug- oder Antriebskraft deutlich zu steigern. Das liegt daran, dass es bei den angeführten Verhältnissen von L zu H zu besonders vorteilhaften Ausprägungen von in dem Piezoelement erzeugten Wellen kommt, die durch die Verwendung mehrerer Friktionselemente oder von Friktionsschichten sehr effektiv auf ein anzutreibendes Element übertragen werden können. Dadurch kann die Last am Aktor, hervorgerufen beispielsweise durch ein durch den Aktor anzutreibendes Element, wesentlich größer sein. Außerdem kann sich der Aktor des erfindungsgemäßen Motors mit der gesamten Oberfläche der Umfangsstirnflächen in Kontakt mit dem anzutreibenden Element befinden. Dies ermöglicht es, den Aktor noch stärker zu belasten. Insgesamt resultiert die Möglichkeit, bedeutend mehr Energie aus dem Aktor abzuführen und dadurch seine Erwärmung zu verringern. Die Verringerung der Erwärmung erhöht die Stabilität und Betriebssicherheit des Motors.

Die oben angeführte mittlere Umfangslänge L bezeichnet hierbei die Länge des Umfangs des Teilhohlzylinders bei einem Radius, welcher der Hälfte der Summe aus Innenradius und Außenradius des Teilhohlzylinders entspricht.

Der Aktor des erfindungsgemäßen Ultraschallmotors kann sich beispielsweise an einer Friktionsschicht des anzutreibenden Elementes über die Friktionselemente abstützen. Vorteilhaft hierbei ist beispielsweise die Verwendung von vier Friktionselementen. Insgesamt erhöht sich die mechanische Stabilität des Aktors, und die minimale Schrittlänge des anzutreibenden Elementes verringert sich. Durch die geringere minimale Schrittlänge erhöht sich die Positioniergenauigkeit.

Der erfindungsgemäße Ultraschallmotor stellt einen Linearmotor dar. Das Piezoelement des Ultraschallaktors ist als Teilhohlzylinder ausgeführt und kann daher beispielsweise das vom Motor anzutreibende Element umfassen. Diese Art der Anordnung trägt dazu bei, die Abmessungen der Vorrichtung, in der der Ultraschallmotor eingesetzt wird, deutlich zu reduzieren, was insbesondere für Miniaturobjektive moderner Fotoapparate und für andere optische Vorrichtungen von Bedeutung ist. Zudem kann der erfindungsgemäße Ultraschallmotor eine Zweikoordinatenbewegung ausführen.

Es kann von Vorteil sein, dass zumindest eine der Umfangsstirnflächen wenigstens abschnittsweise eine radiale Ausrichtung aufweist. Radiale Ausrichtung bedeutet hierbei, dass eine Ebene, innerhalb der die Umfangsstirnfläche liegt, durch die Längsachse des Teilhohlzylinders verläuft. Ebenso kann es von Vorteil sein, dass der Teilhohlzylinder eine Längs-Symmetrieebene aufweist, die entlang der Längsachse des Teilhohlzylinders verläuft. Zudem kann es von Vorteil sein, dass zumindest eine der Umfangsstirnflächen wenigstens abschnittsweise zu der Längs-Symmetrieebene einen Winkel zwischen 0° und 135° einnimmt. Sämtliche zuvor genannten vorteilhaften Weiterbildungen des erfindungsgemäßen Ultraschallmotors erweitern dessen konstruktive und funktionelle Möglichkeiten.

Weiterhin kann es von Vorteil sein, dass jeder der Generatoren eine allgemeine Elektrode, eine Erregerelektrode und eine zwischen der allgemeinen Elektrode und der Erregerelektrode angeordnete piezoelektrische Keramik umfasst, wobei die allgemeine Elektrode und die Erregerelektrode auf der inneren und/oder äußeren Umfangsfläche des Teilhohlzylinders angeordnet sind. Dadurch ergibt sich ein einfacher und kostengünstig zu fertigender Aufbau für den Aktor des Ultraschallmotors.

Es kann günstig sein, dass jeder der Generatoren zwei Gruppen von abwechselnd angeordneten Streifenelektroden und dazwischen angeordneter piezoelektrischer Keramik umfasst, wobei die beiden Gruppen von abwechselnd angeordneten Streifenelektroden die allgemeine Elektrode und die Erregerelektrode bilden. Dies erweitert die konstruktiven Varianten für den Aktor des Ultraschallmotors.

Ebenfalls kann es günstig sein, dass jeder der Generatoren Schichten der allgemeinen Elektrode und Schichten der Erregerelektrode aufweist, die sich mit senkrecht zur Längsachse des Teilhohlzylinders angeordneten Schichten aus Piezokeramik abwechseln. Hierdurch ergibt sich eine Verringerung der Erregerspannung.

Zudem kann es günstig sein, dass die elektrische Erregervorrichtung einen Umschalter für die Generatoren umfasst, der einen oder beide der Generatoren mit der Erregervorrichtung zur elektrischen Anregung verbindet. Dies vereinfacht die Konstruktion der elektrischen Erregervorrichtung.

Darüber hinaus kann es günstig sein, dass jeder der Generatoren in Umfangsrichtung des Teilhohlzylinders in zwei Teile für deren unabhängige elektrische Anregung geteilt ist.

Daneben kann auch günstig sein, dass jeder der Teile der Generatoren mit einem Leistungsverstärker der elektrischen Erregervorrichtung verbunden ist.

Beide zuvor genannten vorteilhaften Weiterbildungen des erfindungsgemäßen Ultraschallmotors ermöglichen eine Zweikoordinatenbewegung des Motors, was zusätzlich seine funktionellen Möglichkeiten und seinen Einsatzbereich erweitert.

Ebenso kann es vorteilhaft sein, dass die elektrische Erregervorrichtung einen Rückkopplungskreis umfasst, mit dem die Erregerfrequenz des mit der Erregervorrichtung verbundenen Generators optimal gehalten ist. Dies erhöht die Betriebsstabilität des Motors bei Last- oder Temperaturänderung.

Die Erfindung wird nachfolgend anhand von Ausführungsbeispielen unter Zuhilfenahme von Figuren näher erläutert.

### Es zeigen:

- Fig. 1: Unterschiedliche Ausführungsformen (Darstellungen 1 und 2) des erfin-dungsgemäßen Ultraschallmotors zusammen mit anzutreibenden Elementen
- Fig. 2 - 4: Zeichnungen zur Erläuterung der Konstruktion des erfindungsgemäßen Ultraschallmotors mit einem Piezoelement in Form eines Teilhohlzylinders
- Fig. 5: Schaltbild zur Darstellung der Verbindung zwischen der elektrischen Er-regerschaltung und dem Aktor des erfindungsgemäßen Ultraschallmotors
- Fig. 6: Ausführungsformen von Generatoren von Ultraschallwellen des erfindungs-gemäßen Ultraschallmotors
- Fig. 7: Abhängigkeit der Eingangsimpedanz Z des Generators von der Frequenz f der Erregerspannung (Darstellung 46) und Abhängigkeit des Phasenver-schiebungswinkels f zwischen der Spannung U und dem Strom I von der Frequenz f der Erregerspannung (Darstellung 47) für eine erste Ausfüh-rungsform des Aktors
- Fig. 8: Darstellungen (Darstellungen 49 und 50) der beim Betrieb des Aktors auftretenden Deformationen für die erste Ausführungsform des Aktors gemäß Fig. 7
- Fig. 9: Bewegungsbahnen von Materialpunkten auf den Umfangsstirnflächen für die erste Ausführungsform des Aktors gemäß Fig. 7 und 8
- Fig. 10: Abhängigkeit der Eingangsimpedanz Z des Generators von der Frequenz f der Erregerspannung (Darstellung 53) und Abhängigkeit des Phasenver-schiebungswinkels f zwischen der Spannung U und dem Strom I von der Frequenz f der Erregerspannung (Darstellung 54) für eine zweite Ausfüh-rungsform des Aktors
- Fig. 11: Darstellungen (Darstellungen 56 und 57) der beim Betrieb des Aktors auftretenden Deformationen für die zweite Ausführungsform des Aktors gemäß Fig. 10
- Fig. 12: Bewegungsbahnen von Materialpunkten auf den Umfangsstirnflächen für die zweite Ausführungsform des Aktors gemäß Fig. 10 und 11
- Fig. 13, 14: Ausführungsformen von Aktoren des erfindungsgemäßen Ultraschallmotors
- Fig. 15, 16: Ausführungsformen des erfindungsgemäßen Ultraschallmotors zusammen mit Motorhalterungen
- Fig. 17: Ausführungsformen von Anpressvorrichtungen für den erfindungsgemäßen Ultraschallmotor
- Fig. 18: Ausführungsformen des erfindungsgemäßen Ultraschallmotors zusammen mit einer Führungsschiene
- Fig. 19 - 24: Anwendungsbeispiele für Verwendungen des erfindungsgemäßen Ultra-schallmotors
- Fig. 25: Darstellungen zur Erläuterung der Ausführung des Aktors des erfindungsgemäßen Ultraschallmotors mit zweiteiligen Generatoren
- Fig. 26: Erfindungsgemäßer Ultraschallmotor mit einem Aktor, der zweiteilige Elektroden aufweist
- Fig. 27, 28: Blockschaltbilder für die elektrische Erregerschaltung

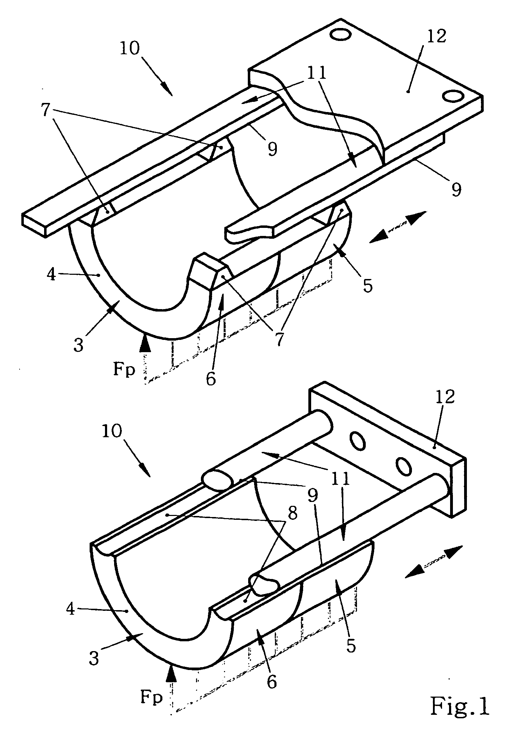

Fig. 1 zeigt eine erste Ausführungsform des erfindungsgemäßen Ultraschallmotors. Dieser umfasst einen Ultraschallaktor 3 mit einem Piezoelement in Form eines Teilhohlzylinders 4. Der Aktor 3 seinerseits umfasst zwei Ultraschallwellengeneratoren 5 und 6. Er weist darüber hinaus auf den Umfangsstirnflächen des Teilhohlzylinders angeordnete Friktionselemente 7 (Darstellung 1) oder Friktionsschichten 8 (Darstellung 2) auf. Die Friktionselemente 7 oder Friktionsschichten 8 können mittels einer in Fig. 1 nicht dargestellten Anpressvorrichtung gegen die Friktionsoberfläche 9 von Führungselementen 11, die auf einer Motorhalterung 12 angeordnet sind, gedrückt werden. Die Bewegungsrichtung des Aktors 3 oder eines anderen Elementes des Motors ist sowohl in Fig. 1, als auch in den übrigen jeweiligen Figuren durch einen Doppelpfeil gekennzeichnet.

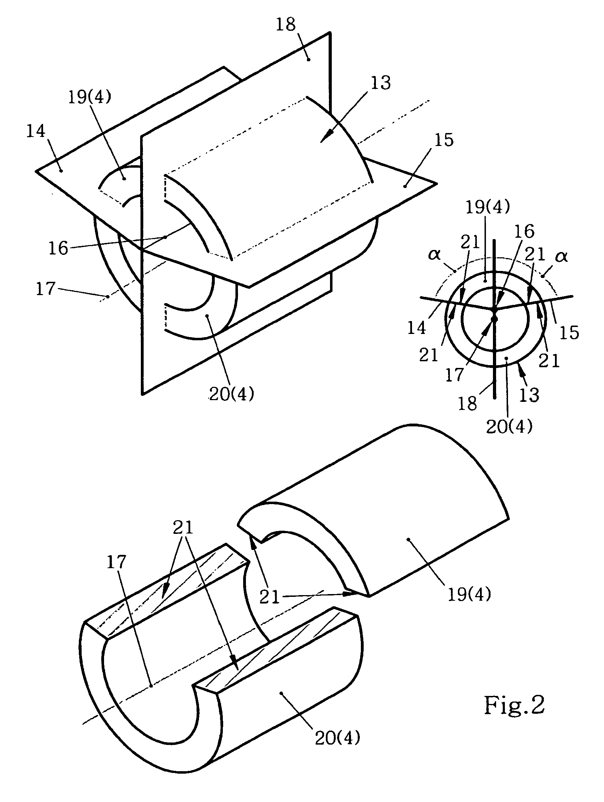

Die Darstellungen der Fig. 2 erläutern die Bildung des Piezoelements 4 in Form eines Teilhohlzylinders aus dem entsprechen Vollhohlzylinder. Aus dem zugrunde liegenden (Voll)Hohlzylinder 13 ergibt sich der Teilhohlzylinder 20 durch Heraustrennen eines Umfangsabschnitts des Hohlzylinders 13. Hierbei können zwei Sekantenhalbebenen 14 und 15 als Trennebenen betrachtet werden. Die Sekantenhalbebenen 14 und 15 sind so angeordnet, dass ihre Berührungslinie 16 parallel zur Längsachse 17 des Hohlzylinders 13 bzw. des Teilhohlzylinders 20 verläuft und sich auf der Längs-Symmetrieebene 18 im Inneren des Zylinders befindet. Die Längs-Symmetrieebene 18 schneidet die Längsachse 17 des Zylinders 13 bzw. des Hohlzylinders 20. Die beiden Sekantenhalbebenen 14 und 15 sind in der betrachteten Ausführungsform symmetrisch unter dem gleichen Winkel α zur Längs-Symmetrieebene 18 geneigt. Die Längsachse 17 bildet zugleich die Längsachse des Piezoelementes 4 und des Aktors 3.

Durch die Schnittteilung der Sekantenhalbebenen 14 und 15 des Hohlzylinders 13 ergeben sich die beiden Teile bzw. Teilhohlzylinder 19 und 20. Jeder der Teilhohlzylinder 19 und 20 weist Umfangsstirnflächen 21 auf, an denen im Aktor 3 des erfindungsgemäßen Motors das oder die Friktionselemente 7 und/oder die Friktionsschicht bzw. Friktionsschichten 8 angeordnet sind.

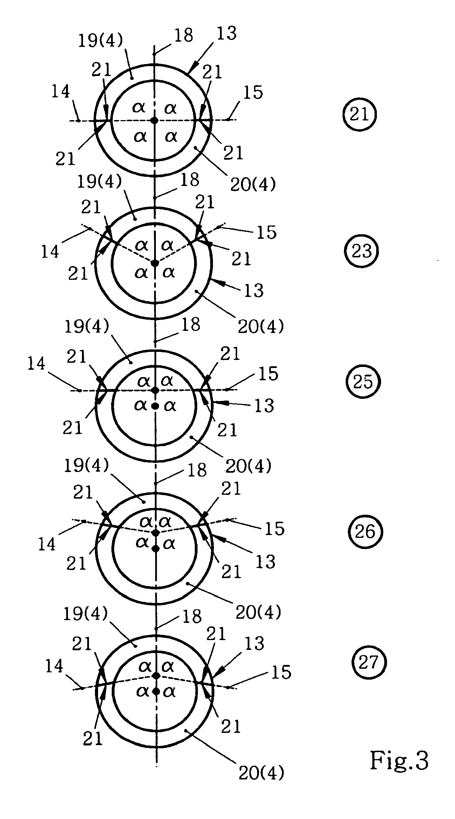

Gemäß Fig. 3 existieren für die geometrische Ausrichtung der Umfangsstirnflächen der Teilhohlzylinder 19 und 20 vielfältige Möglichkeiten. Die Darstellungen 21 und 23 der Fig. 3 kennzeichnen die Fälle, bei denen die Berührungslinie 16 der Sekantenhalbebenen 14 und 15 mit der Längsachse 17 des Hohlzylinders 13 bzw. der Teilhohlzylinder 19 und 20 zusammenfällt. Gemäß Darstellung 21 können die Sekantenhalbebene 14 und 15 mit der Längs-Symmetrieebene 18 einen rechten Winkel (α gleich 90°) bilden. Gemäß Darstellung 23 ist es darüber hinaus möglich, dass die Sekantenhalbebenen 14 und 15 mit Bezug auf den Teilhohlzylinder 19 einen spitzen Winkel (α kleiner 90°) mit der Längs-Symmetrieebene 18 bilden, bzw. dass die Sekantenhalbebenen 14 und 15 mit Bezug auf den Teilhohlzylinder 20 einen stumpfen Winkel (α größer 90°) mit der Längs-Symmetrieebene 18 bilden. Daneben ist es ebenso möglich (in Fig. 3 nicht dargestellt), dass bzgl. der Teilhohlzylinder 19 und 20 keine Symmetrieebene, die entlang der Längsachse 17 verläuft, existiert.

Die Darstellungen 25, 26 und 27 der Fig. 3 kennzeichnen die Fälle, bei denen die Berührungslinie 16 der Sekantenhalbebenen 14 und 15 nicht mit der Längsachse 17 des Hohlzylinders 13 bzw. der Teilhohlzylinder 19 und 20 zusammenfällt, und die Berührungslinie 16 auf der Längs-Symmetrieebene 18, jedoch beabstandet zur Längsachse 17 liegt. Hierbei können die Sekantenhalbebenen 14 und 15 sowohl bezogen auf den Teilhohlzylinder 19, als auch den Teilhohlzylinder 20 einen rechten, einen spitzen oder einen stumpfen Winkel α mit der Längs-Symmetrieebene 18 bilden.

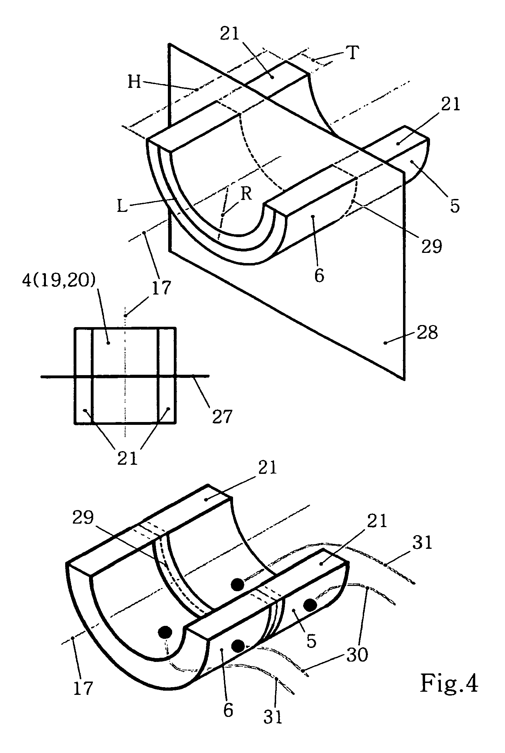

Fig. 4 veranschaulicht zum Einen die geometrischen Kenngrößen des Piezoelementes 4 in Form eines Teilhohlzylinders und zum Anderen die Anordnung der Ultraschallwellengeneratoren 5 und 6. Das Piezoelement 4 in Form eines Teilhohlzylinders hat eine mittlere Umfangslänge L bezogen auf den Radius R, wobei sich besagter Radius R aus der Hälfte der Summe aus Innen- und Außenradius des Teilhohlzylinders bzw. des entsprechenden (Voll)Hohlzylinders berechnet. Weiterhin hat der Teilhohlzylinder in axialer Richtung eine Höhe H und in radialer Richtung eine Wandstärke T. Die Symmetrieebene 28 verläuft durch den Mittelpunkt der Linie, welche die Höhe H definiert, und teilt somit den Teilhohlzylinder in axialer Richtung in gleich große Teile. Zudem verläuft die Symmetrieebene 28 senkrecht zur Längsachse 17

Für den erfindungsgemäßen Ultraschallmotor sind folgende zwei Varianten für das Piezoelement 4 besonders vorteilhaft. Im ersten Fall beträgt das Verhältnis von UH etwa 1,5. Im zweiten Fall beträgt das Verhältnis von UH etwa 9,2. Das genaue Verhältnis hängt vom Typ der Piezokeramik und von der Wandstärke T ab. Die Wandstärke T kann im sich Bereich von 0,03-0,1 L bewegen. Der Radius R kann im Bereich von L/1,9 π bis L/0,5 π liegen.

Die Ultraschallwellengeneratoren 5 und 6 sind symmetrisch bezogen auf die Symmetrieebene 28 angeordnet. Die Markierungslinie 29 zeigt die Schnittlinie der Symmetrieebene 28 mit dem Piezoelement 4.

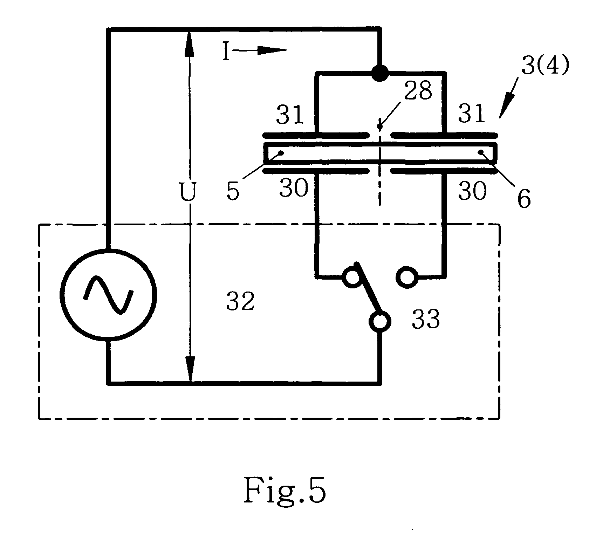

Gemäß Fig. 5 weist jeder der Generatoren 5, 6 Ausgänge 30 und 31 zur Verbindung mit einer elektrischen Erregervorrichtung 32 auf. Mit einem Umschalter 33 wir die elektrische Erregervorrichtung 32 mit dem Generator 5 oder dem Generator 6 verbunden. Diese Vorrichtung stellt eine Wechselspannung U mit einer Frequenz f bereit. Durch das Einwirken der Spannung U fließt über den Generator 5 oder 6 ein Strom I.

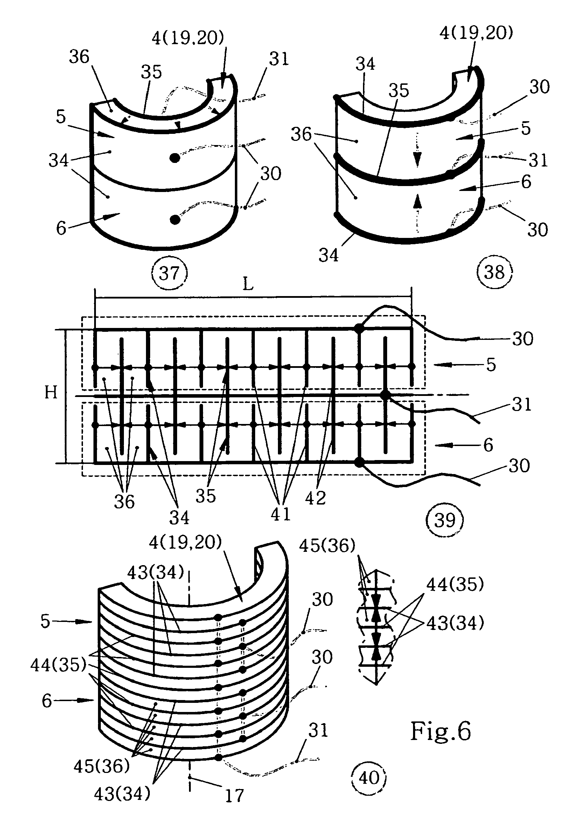

Nach Fig. 6 können die Generatoren 5 und 6 im Aktor 3 des erfindungsgemäßen Motors als Erregerelektroden 34 und allgemeine Elektrode 35 ausgeführt sein, wobei ein Zwischenraum 36 zwischen ihnen mit piezoelektrischer Keramik ausgefüllt ist, die gemäß den Darstellungen 38 bis 40 der Fig. 6 normal zu den Elektroden polarisiert ist. Die Elektroden 34 und 35 können gemäß Darstellung 37 der Fig. 6 auf den beiden zylindrischen Oberflächen, d.h. Innen- und Außenumfangsfläche, des Piezoelementes 4 oder auf nur einer seiner zylindrischen Oberflächen, d.h. Innen- oder Außenumfangsfläche, wie in Darstellung 38 der Fig. 6 gezeigt, angeordnet sein. Weiterhin kann jeder der Ultraschallwellengeneratoren 5 oder 6 in Form von zwei Gruppen abwechselnd angeordneter Elektroden 41 und 42, die die Erregerelektrode 34 und die allgemeine Elektrode bilden, ausgeführt sein, siehe Darstellung 40 der Fig. 6. Auch in diesem Fall können die Elektroden 34 und 35 auf einer oder zwei der zylindrischen Oberflächen des Piezoelementes 4 angeordnet sein.

Jeder der Ultraschallwellengeneratoren 5 oder 6 kann in Form von Schichten 43 der Erregerelektroden 34 oder Schichten 44 der allgemeinen Elektroden 35, die abwechselnd mit piezokeramischen Schichten 45 angeordnet sind, ausgeführt sein. Alle diese Schichten sind senkrecht zur Längsachse 17 des Teilhohlzylinders bzw. des zum entsprechenden Vollhohlzylinder ergänzten Teilhohlzylinder angeordnet wie anhand Darstellung 40 gezeigt.

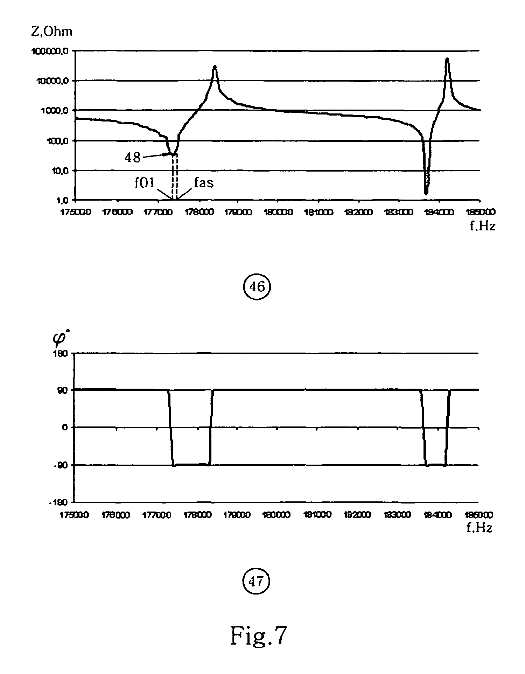

Die in den Fig. 7, 8 und 9 gezeigten Abhängigkeiten gelten für den Aktor 3 mit dem Piezoelement 4 mit folgenden Abmessungen: UH=1,46, R=9 mm, L=28,6 mm, H=19,6 mm, T=2,5 mm. Der entsprechende Aktor ist aus der Piezokeramik PIC181 der Firma PI Ceramic GmbH gefertigt.

Darstellung 46 der Fig. 7 zeigt die Abhängigkeit der Eingangsimpedanz Z des Generators 5 oder 6 von der Frequenz f der Erregerspannung U. Darstellung 47 von Fig. 7 zeigt die Abhängigkeit des Phasenverschiebungswinkels ϕ zwischen der Spannung U und dem Strom I von der Frequenz f. Die Impedanzspitze 48 stellt die Resonanz für die Frequenz f₀₁ dar, die im Wesentlichen gleich der Arbeitsfrequenz fₐₛ des erfindungsgemäßen Motors ist. Bei der Frequenz fₐₛ wird im Aktor 3 eine teilzylindrische asymmetrische Stehwelle erzeugt.

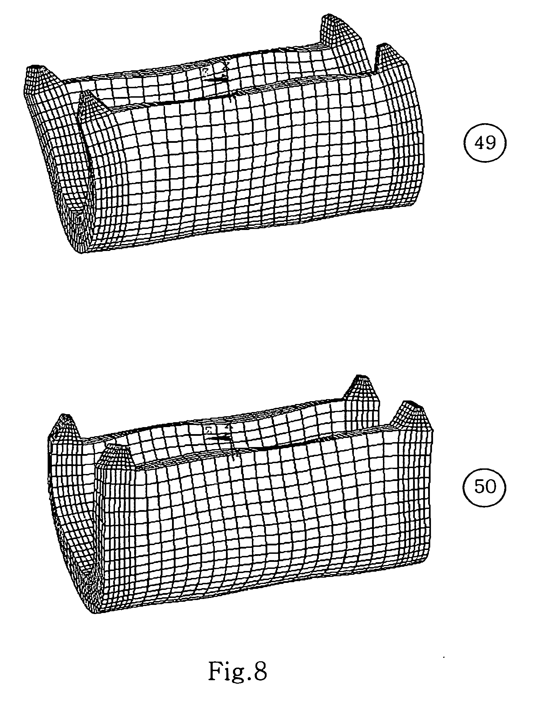

Die Darstellungen 49 und 50 der Fig. 8 verdeutlichen die Deformationen des Piezoelementes 4 bei der Erzeugung einer teilzylindrischen asymmetrischen Stehwelle in diesem.

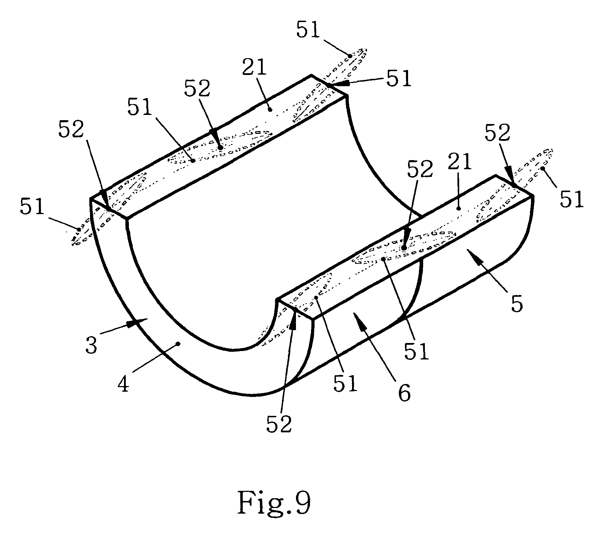

Fig. 9 zeigt Bewegungsbahnen 51 der auf den Umfangsstirnflächen 21 befindlichen Punkte 52 im Piezoelement 4 bei Erregung einer teilzylindrischen asymmetrischen Stehwelle in diesem.

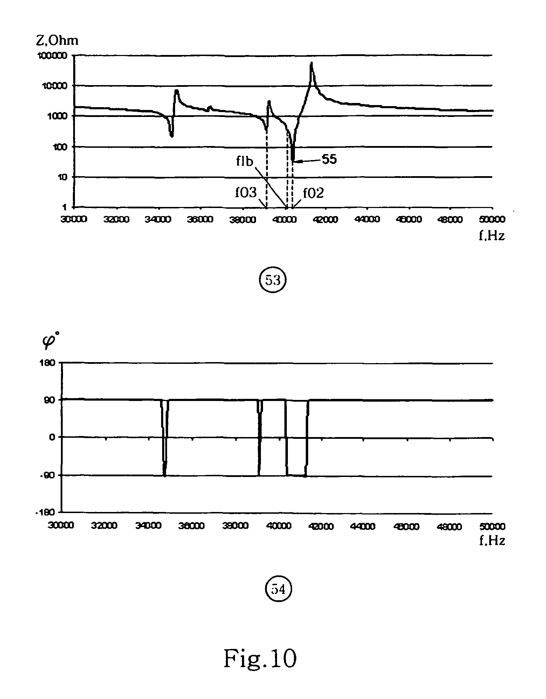

Die in den Fig. 10, 11 und 12 gezeigten Abhängigkeiten gelten für den Aktor 3 mit dem Piezoelement 4 mit folgenden Abmessungen: UH=9,24, R=15 mm, L=83,2 mm, H=9 mm, T=2 mm. Der entsprechende Aktor ist aus der Piezokeramik PIC181 der Firma PI Ceramic GmbH gefertigt.

Die Darstellung 53 von Fig. 10 zeigt die Abhängigkeit der Eingangsimpedanz Z der Generatoren 5 oder 6 von der Frequenz f der Erregerspannung U. Darstellung 54 von Fig. 10 zeigt die Abhängigkeit des Phasenverschiebungswinkels ϕ zwischen der Spannung U und dem Strom I von der Frequenz f. Die Impedanzspitze 55 stellt die Resonanz für die Frequenz f_{lb} dar, die im Wesentlichen der Arbeitsfrequenz des erfindungsgemäßen Motors entspricht. Bei der Frequenz f_{lb} wird im Aktor 3 gleichzeitig eine teilzylindrische Longitudinalstehwelle und eine teilzylindrische Biegestehwelle erzeugt.

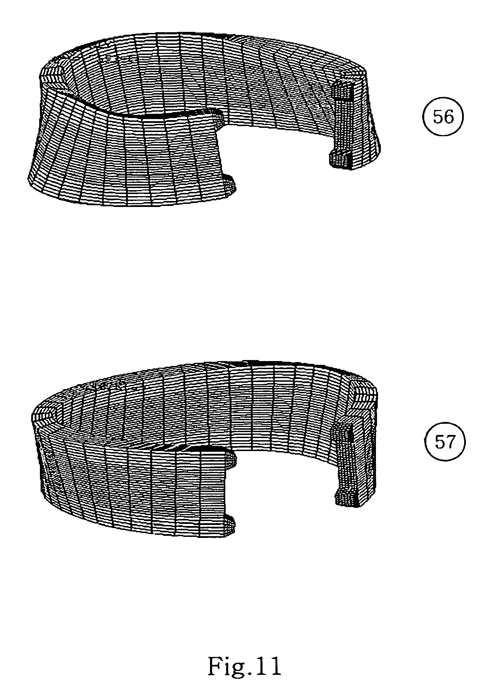

Die Darstellungen 56 und 57 in Fig. 11 verdeutlichen die Deformationen des Piezoelementes 4 bei gleichzeitiger Erzeugung einer teilzylindrischen Longitudinalstehwelle und einer teilzylindrischen Biegestehwelle in diesem.

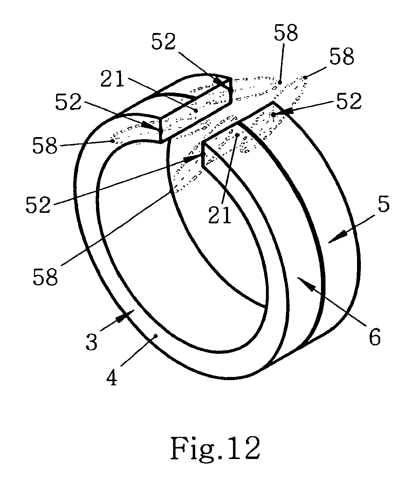

Fig. 12 zeigt Bewegungsbahnen 58 der auf den Umfangsstirnflächen 21 befindlichen Punkte 52 des Piezoelementes bei gleichzeitiger Erregung einer teilzylindrischen Longitudinalstehwelle und einer teilzylindrischen Biegestehwelle in diesem.

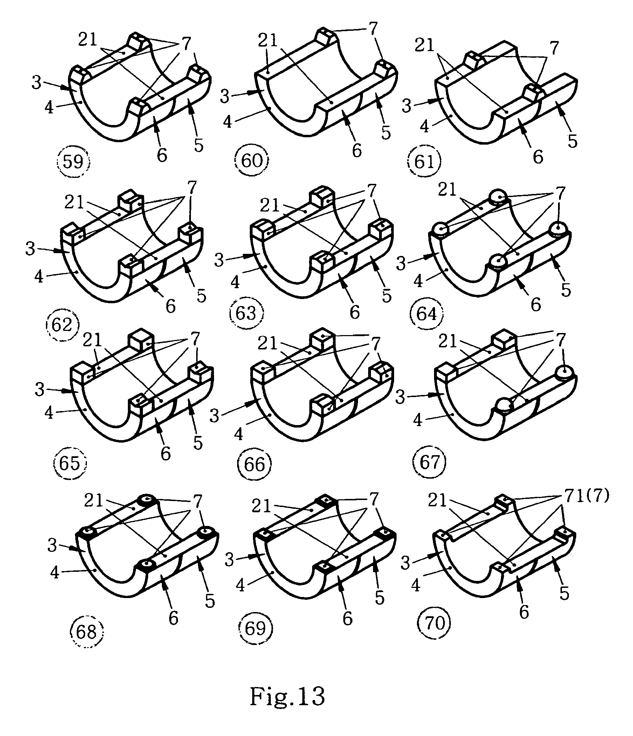

Die Darstellungen 59 bis 70 der Fig. 13 zeigen unterschiedliche Ausführungsformen der am Aktor 3 des erfindungsgemäßen Motors angeordneten Friktionselemente 7.
Diejenigen Friktionselemente, welche gemäß den Darstellungen 59 bis 67 der Fig. 13 die Form von Prismen aufweisen, sind aus harten abriebfesten Werkstoffen, beispielsweise aus Keramik auf der Basis von Al₂O₃, ZrO₂, SiC, Si₃N₄ oder aus anderen harter Oxid- und Nichtoxidkeramik, hergestellt. Ebenso können besagte Friktionselemente aus harten Monokristallen wie z.B. Saphir, Rubin, Korund hergestellt sein. Darüber hinaus können sie auch aus Metallkeramik auf der Basis von Wolframkarbid, Titankarbid und ähnlichen gefertigt sein. Außerdem können die Friktionselemente aus Sorten harter Polymerwerkstoffe, angefüllt mit Teilchen eines harten abriebfesten Materials wie z.B. Aluminiumoxid, Zirkoniumoxid, Glas, Wolframkarbid, Titankarbid u. a., hergestellt sein. Wie anhand der Darstellungen 59 und 62 bis 70 der Fig. 13 gezeigt, können die Friktionselemente 7 beispielsweise an vier Positionen der Umfangsstirnflächen angeordnet sein, wobei jeweils zwei Friktionselement auf einer der beiden Umfangsstirnflächen angeordnet sind. Hierbei ist denkbar, dass zwei Gruppen von Friktionselementen verwendet werden, wobei auf einer Umfangsstirnfläche zwei gleiche Friktionselemente der ersten Gruppe angeordnet sind, während auf der anderen Umfangsstirnfläche zwei gleiche Friktionselemente der zweiten Gruppe angeordnet sind, wie dies in den Darstellungen 65 bis 67 der Fig. 13 gezeigt ist. Gemäß den Darstellungen 60 und 61 der Fig. 13 ist es weiterhin möglich, nur jeweils ein Friktionselement 7 auf einer der Umfangsstirnflächen anzuordnen. Auch hier ist denkbar, dass zwei unterschiedlich ausgeführte Friktionselemente zum Einsatz kommen.

Die Darstellungen 68 und 69 der Fig. 13 zeigen Friktionselemente 7 in Form dünner Schichten eines harten, auf die piezokeramische Oberfläche des Aktors 3 aufgetragenen Materials. Solche Friktionselemente 7 können aus harten Glassorten bzw. aus mit Partikeln eines harten abriebfesten Materials gefülltem Glas hergestellt sein. Die Friktionselemente können beispielsweise mittels eines Plasmaverfahrens als dünne Aluminiumoxidschichten oder Schichten aus anderen harten abriebfesten Werkstoffen aufgetragen werden. Zudem können solche Friktionselemente mittels chemischer oder elektrochemischer Abscheidung von Nickelschichten oder Schichten aus hartem Chrom u. a. aufgetragen werden.

Darstellung 70 der Fig. 13 zeigt den Aktor 3 eines erfindungsgemäßen Motors, bei dem die Friktionselemente 7 aus dem gleichen piezokeramischen Material wie das Piezoelement 4 hergestellt sind. Derartige Friktionselemente weisen eine dünne abriebfeste Schicht 71 auf. Als abriebfeste Schicht 71 können Schichten aus hartem abriebfestem Glas oder aus Glas, welches mit Teilchen aus harten abriebfesten Werkstoffen gefüllt ist, verwendet werden. Es können zudem Schichten aus chemisch abgeschiedenen Nickel oder Chrom verwendet werden. Außerdem können Schichten aus Aluminiumoxid oder Zirkoniumoxid, aufgetragen mittels eines Plasmaverfahrens oder Schichten, die kleine, aus der Gasphase abgeschiedene Diamantkristalle enthalten, verwendet werden. Es können darüber hinaus Schichten in Form eines dünnen Überzugs aus CrN, CrCN, (Cr,W)N, (Cr,Al)N, NbN-CrN, TiN, TiCN, (Ti,Al)N, V₂O₅ und ähnlichen Materialien zum Einsatz kommen.

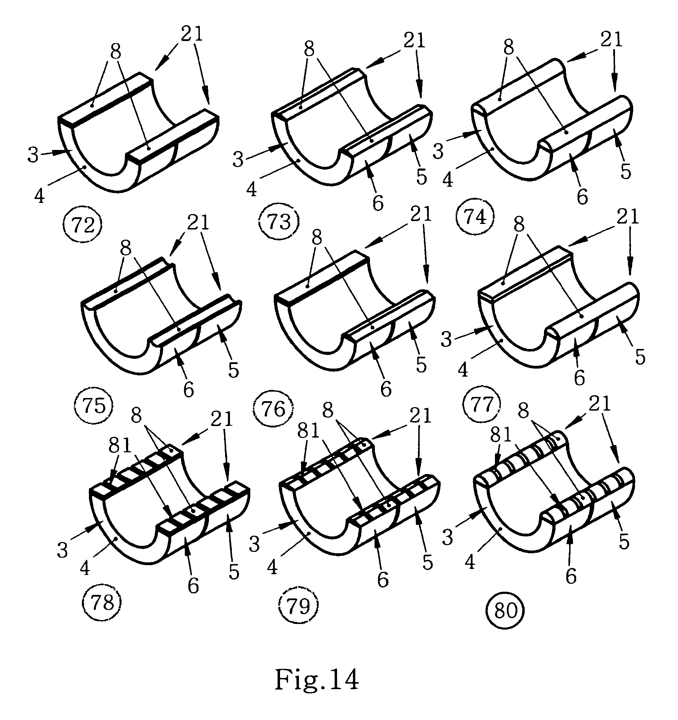

Die Darstellungen 72 bis 80 der Fig. 14 zeigen unterschiedliche Ausführungsformen von Aktoren 3 des erfindungsgemäßen Motors mit auf den Umfangsstirnflächen 21 angeordneten Friktionsschichten 8. Die Friktionsschichten 8 können gemäß Darstellung 72 der Fig. 14 als ebene Fläche ausgeführt sein. Die Friktionsschichten 8 können zudem konvex oder konkav geformt sein und dabei einflächig (Darstellungen 74 und 75) oder mehrflächig (Darstellung 73) sein. Es ist möglich, dass auf den Umfangsstirnflächen unterschiedlich geformte Friktionsschichten 8 angeordnet sind, wie in den Darstellungen 76 und 77 der Fig. 14 gezeigt. Gemäß den Darstellungen 78 bis 80 der Fig. 14 können die Friktionsschichten 8 durch Nuten 81 in einzelne Friktionsschichtabschnitte getrennt sein.

Die Friktionsschichten 8 können aus einem harten abriebfesten Glas oder aus Glas, das mit Partikeln eines harten abriebfesten Materials gefüllt ist, hergestellt sein. Außerdem können Friktionsschichten 8 aus Aluminiumoxid oder Zirkoniumoxid, aufgetragen mit einem Plasmaverfahren, verwendet werden. Zudem sind Friktionsschichten denkbar, die kleine, aus der Gasphase abgeschiedene Diamantkristalle enthalten. Es können auch Friktionsschichten 8 aus chemisch abgeschiedenem Nickel oder Chrom zum Einsatz kommen. Dies können Schichten in Form dünner Überzüge aus CrN, CrCN, (Cr,W)N, (Cr,Al)N, NbN-CrN, TiN, TiCN, (Ti,Al)N, V₂O₅ und ähnlichen Materialien sein.

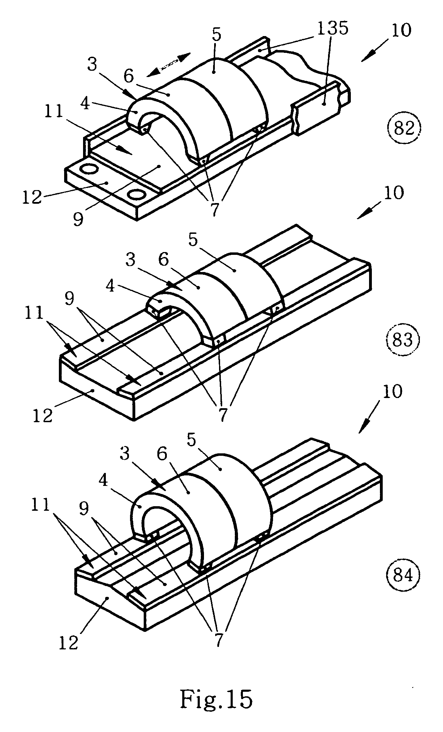

Fig. 15 zeigt verschiedene Ausführungsformen des erfindungsgemäßen Ultraschallmotors 10 mit Aktoren 3, bei denen die Umfangsstirnflächen 21 zur (nicht dargestellten) Längs-Symmetrieebene 18 einen rechten Winkel α (Darstellung 82), einen stumpfen Winkel α (Darstellung 83) und einen spitzen Winkel α (Darstellung 84) einnehmen. In den Darstellungen 83 und 84 der Fig. 15 sind zusätzlich eine gerichtete Friktionsoberfläche 9, eine Führungsschiene 11 und eine Halterung bzw. ein Gehäuse 12 dargestellt, während in Darstellung 82 darüber hinaus zwei begrenzende Ränder 135 gezeigt sind.

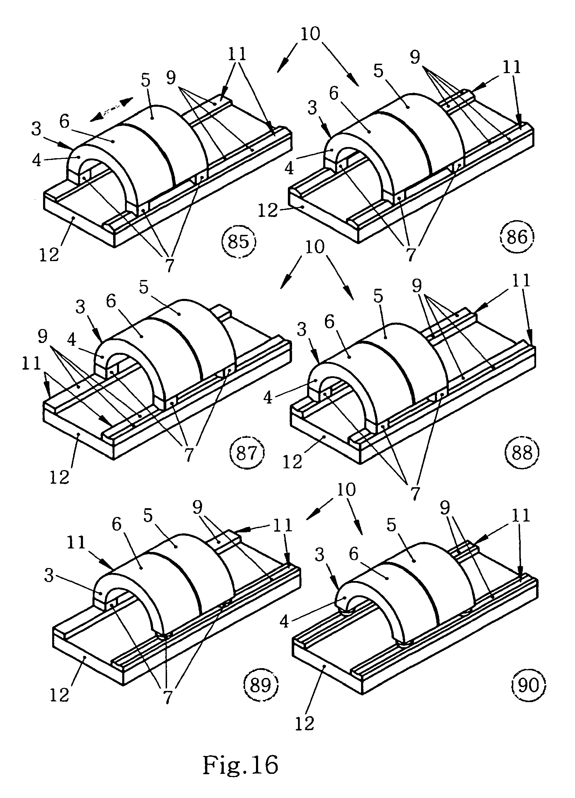

Fig. 16 zeigt unterschiedliche Ausführungsformen des erfindungsgemäßen Ultraschallmotors 10 zusammen mit denkbaren Formen von Führungsschienen 11, die mit den Friktionselementen 7 bzw. Friktionsschichten 8 in Kontakt stehen. Die Führungsschienen 11 können eine ebene Form, eine konvexe Form oder eine konkave Form aufweisen und dabei ein- oder mehrflächig sein. Es ist möglich, Führungsschienen 11 unterschiedlicher Geometrie zu verwenden, wie in den Darstellungen 85, 87 und 89 der Fig. 16 gezeigt.

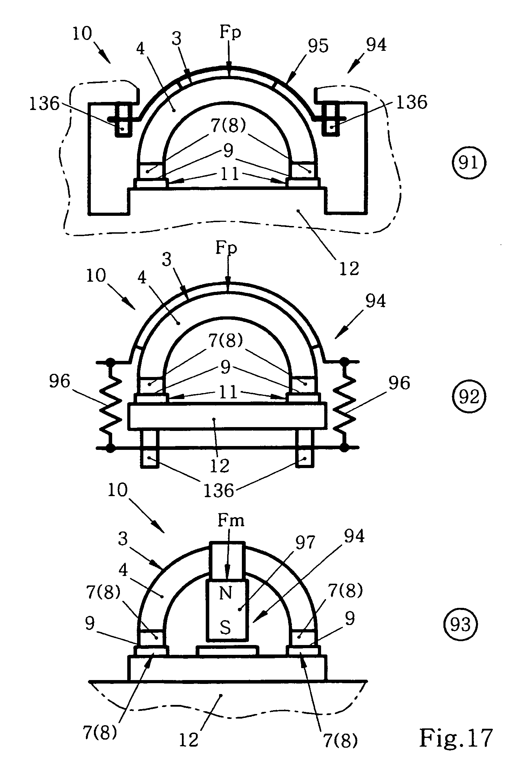

Die in Fig. 17 gezeigten Darstellungen 91, 92 und 93 zeigen unterschiedliche Ausführungsformen von Andrückvorrichtungen 94 zum Andrücken der Friktionselemente 7 oder der Friktionsschichten 8 an die Friktionsoberflächen 9. Die in Darstellung 91 der Fig. 17 gezeigte Anpresskraft Fp wird durch eine gekrümmte Flachfeder 95 erzeugt. Die in Darstellung 92 der Fig. 17 gezeigte Anpresskraft Fp wird durch Rundfedern 96 erzeugt. In beiden Fällen sind die Federn 95 und 96 im Gehäuse 12 mittels Lager 136 befestigt. Die in Darstellung 93 der Fig. 17 gezeigte Kraft Fm wird durch den Magneten 97 hervorgerufen. Daneben sind weitere, konstruktiv andersartige Andrückvorrichtungen vorstellbar, die hier nicht weiter beschrieben sind.

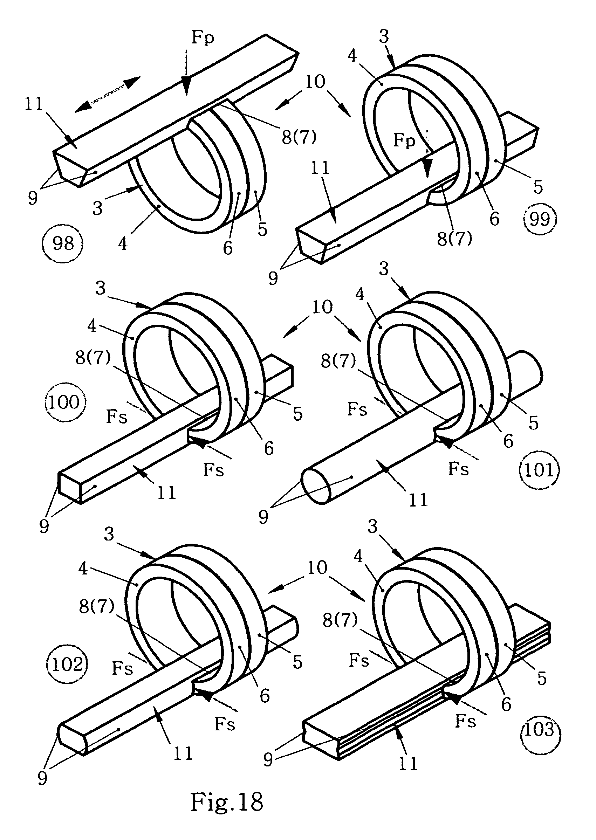

Die Darstellungen 98 und 99 der Fig. 18 zeigen erfindungsgemäße Ultraschallmotoren 10 zusammen mit der Führungsschiene 11, die hier einen keilförmigen Querschnitt aufweist. Die Anpresskraft Fp wirkt dabei in eine Richtung, bei der es zu einem Verkeilen der Führungsschiene 11 mit dem Aktor 3 kommt.

Die Darstellungen 100 bis 104 der Fig. 18 zeigen erfindungsgemäße Ultraschallmotoren 10 zusammen mit der Führungsschiene 11, bei denen die Anpresskraft Fs anhand der elastischen Eigenschaften des Piezoelementes 4 des Aktors 3 realisiert wird.

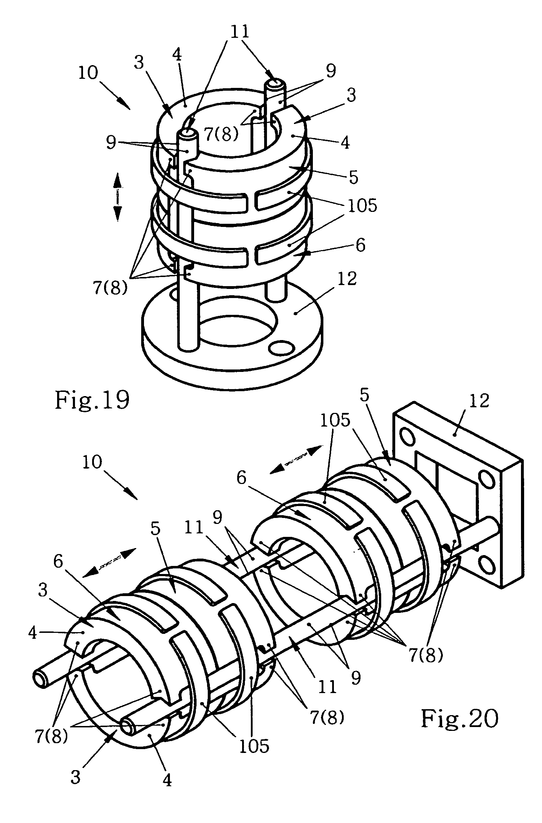

Fig. 19 zeigt einen erfindungsgemäßen Ultraschallmotor 10 mit zwei gegenüberliegend koaxial angeordneten Aktoren 3, die mittels Ringfedern 105 an die Führungsschienen 11 angepresst sind.

Fig. 20 zeigt einen erfindungsgemäßen Ultraschallmotor 10 mit zwei Gruppen von Aktoren 3, die auf den gleichen Führungsschienen 11 verschoben werden.

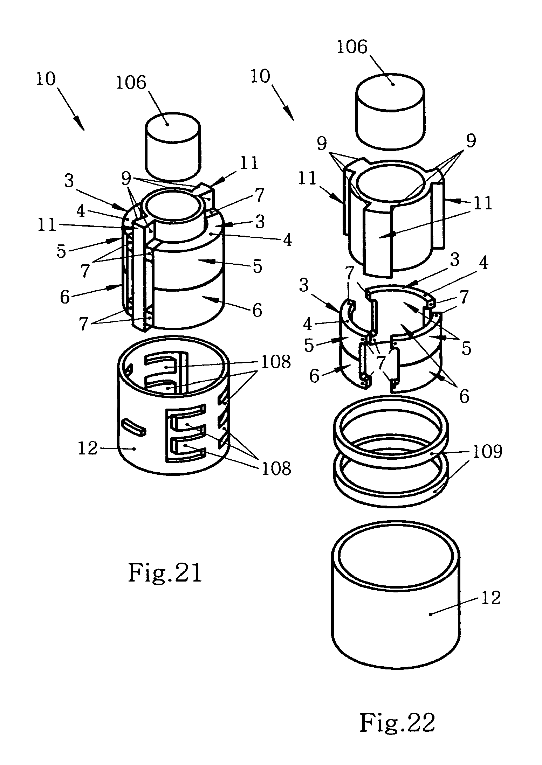

Fig. 21 zeigt die Verwendung des erfindungsgemäßen Motors in einem optischen Objektiv, in dem durch eine Halterung 107 eine optische Linsengruppe 106 fixiert ist und die mittels der zwei gegenüberliegend angeordneten Aktoren 3 verschoben werden kann. Die Aktoren 3 werden mit Hilfe von Federn 108, die Teil des Gehäuses 12 sind, an die Führungsschienen 11 angepresst.

Fig. 22 zeigt ebenso die Verwendung des erfindungsgemäßen Motors in einem optischen Objektiv, welches drei koaxial angeordnete Aktoren 3 aufweist. Die Aktoren werden mittels sich im Gehäuse 12 befindender Gummiringe 109 an die Führungsschienen 11 angepresst.

Fig. 23 zeigt die Verwendung des erfindungsgemäßen Motors in einem Miniaturobjektiv.

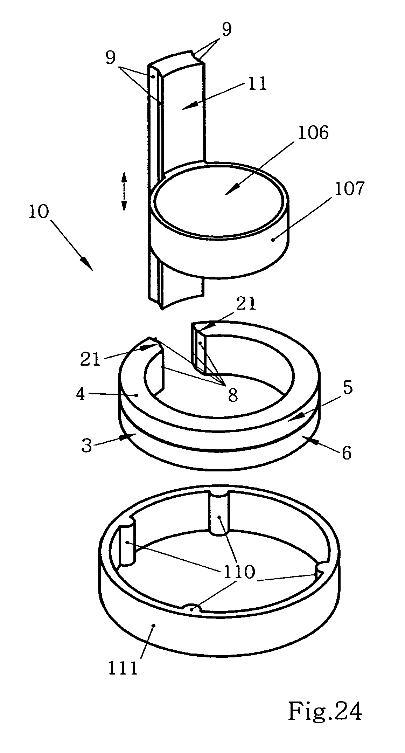

Fig. 24 zeigt die Verwendung des erfindungsgemäßen Motors als Antrieb für eine optische Linsengruppe 106, wobei der Aktor 3 mit Hilfe von Wulsten 110 eines ringförmigen Halters 111 in Bereich der Punkte mit minimaler Schwingungsgeschwindigkeit fixiert ist.

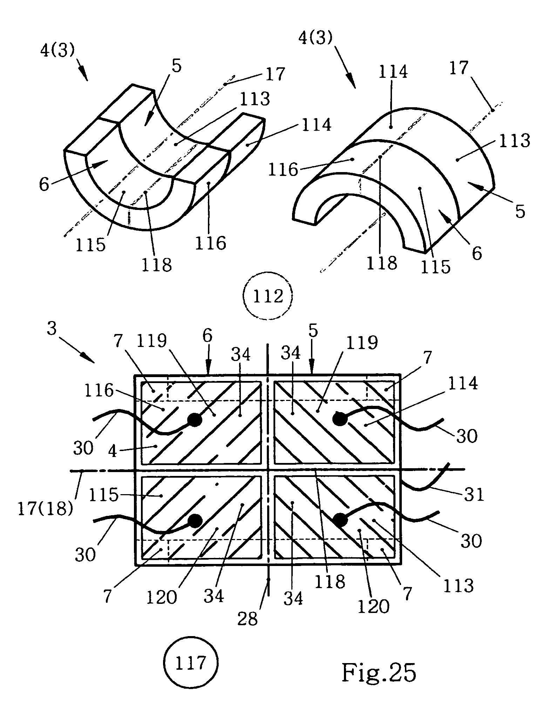

Darstellung 112 der Fig. 25 zeigt ein Piezoelement 4, bei dem jeder der Ultraschallwellengeneratoren 5 und 6 durch die Längs-Symmetrieebene 18 bezogen auf die Umfangsrichtung in zwei gleiche bzw. gleichwertige Teile 113, 114 und 115, 116 geteilt ist. Darstellung 117 der Fig. 25 zeigt den Aktor 3 mit den getrennten Ultraschallwellengeneratoren 5 und 6 gemäß Darstellung 112 in Draufsicht. In beiden Darstellungen 112 und 117 ist nur die Markierung 118 des Schnitts der Längs-Symmetrieebene 18 mit dem Piezoelement 4 dargestellt. Die Teilung der Ultraschallwellengeneratoren 5 und 6 kann beispielsweise durch Teilen der Erregerelektroden 34 in zwei gleiche bzw. gleichwertige Teile 119 und 120, wie in Darstellung 117 der Fig. 25 gezeigt, erfolgen. Die allgemeinen Elektroden 35 können ungetrennt bleiben.

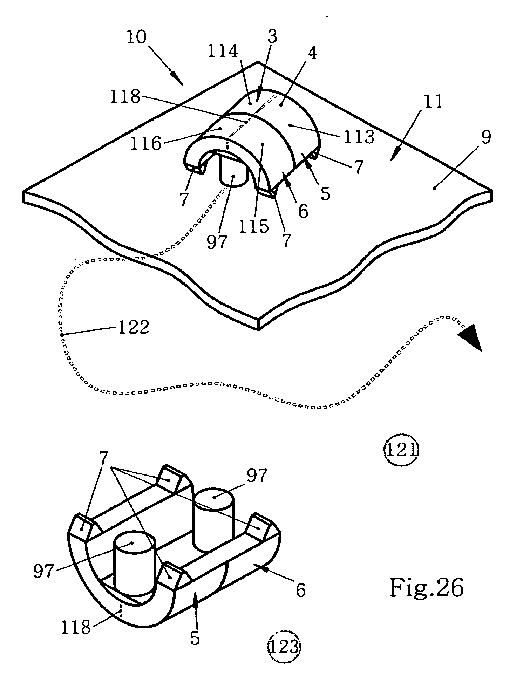

Die Darstellung 121 der Fig. 26 zeigt den erfindungsgemäßen Ultraschallmotor 10 mit getrennten Ultraschallwellengeneratoren 5 und 6, mit dem sich beispielsweise eine Verschiebung auf den aus einem magnetischen Werkstoff hergestellten Führungsschienen 11 realisieren lässt. Die punktierte Linie 122 zeigt eine mögliche Bewegungsbahn des Aktors 3 auf der Führungsschiene.

Darstellung 123 der Fig. 26 zeigt eine konstruktive Ausführung des Aktors 3 des erfindungsgemäßen Motors mit auf ihm befestigten Magneten 97.

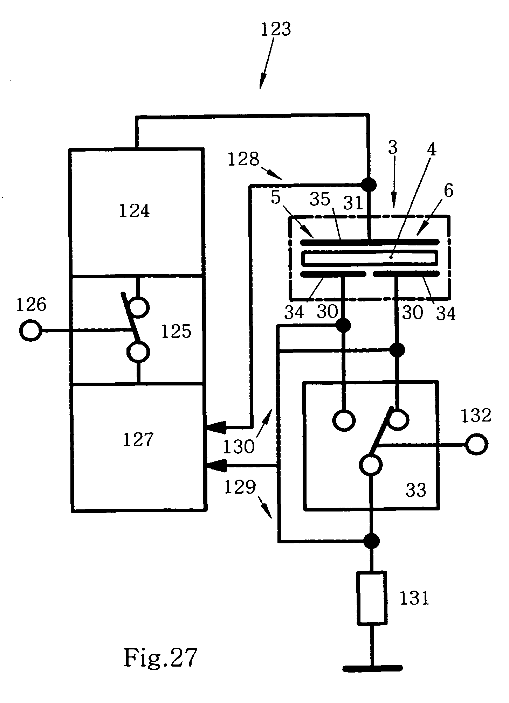

Fig. 27 zeigt eine Blockschaltung der elektrischen Erregervorrichtung 32 des Aktors 3. Die Blockschaltung umfasst einen Leistungsverstärker 124, einen Ausschalter für das Erregersignal 125 mit einem Eingang 126 für das Steuersignal, einer Formierungseinrichtung für das Erregersignal 127, Rückkopplungssignalkreisen 128, 129 und 130, einem Element des Rückkopplungskreises 131 und einem Umschalter 33 mit einem Eingang 132 für das Steuersignal. Die Formierungseinrichtung 127 kann aus einem Filter, einem Phasenschieber, einem Verstärker für das Rückkopplungssignal oder einem Phasendetektor mit einem spannungsgeführten Generator bestehen. Das Rückkopplungselement 131 kann ein Widerstand, ein Kondensator oder eine Kombination aus beidem sein, wobei sie bei einer Kombination in Reihe oder parallel geschaltet sind.

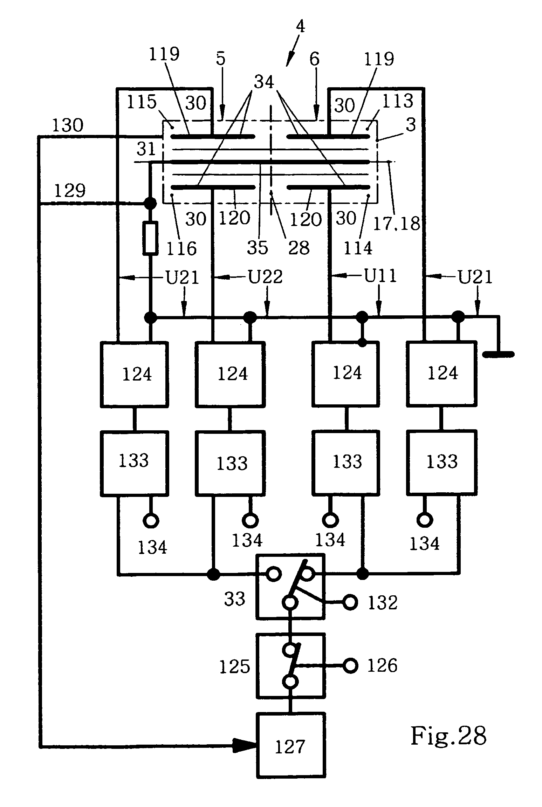

Fig. 28 zeigt eine Blockschaltung der elektrischen Erregervorrichtung 23 des Aktors 3 mit getrennten Ultraschallwellengeneratoren 5 und 5. Diese Vorrichtung besteht aus vier Leistungsverstärkern 124, wobei jeder von ihnen mit einem der Teile 113, 114 und 115, 116 der Ultraschallwellengeneratoren 5 und 6 verbunden ist. An jeden Ultraschallwellengenerator 5 und 6 ist die Erregerspannung U11, U12 oder U21, U22 angelegt. Der Eingang jedes Leistungsverstärkers 124 ist mit dem Umschalter 33 über eine Nachstimmeinrichtung für das Erregersignal 133 mit dem Steuersignaleingang 134 verbunden.

Nachfolgend wird die Funktionsweise des erfindungsgemäßen Ultraschallmotors näher erläutert.

Bei dem erfindungsgemäßen Ultraschallmotor existieren für das Piezoelement 4 des Aktors 3 zwei besonders vorteilhafte Ausführungsformen, die durch das Verhältnis der Länge L zur Höhe H bestimmt werden. Im ersten Fall liegt das Verhältnis von UH zwischen 1,3 und 1,8 und beträgt vorzugsweise etwa 1,5 (siehe hierzu Fig.1, Fig. 13 - 23 und Fig. 25,26). Im zweiten Fall liegt das Verhältnis von UH zwischen 8,8 und 9,5 und beträgt vorzugsweise etwa 9,2 (siehe Fig. 18 und 24).

In beiden Fällen wird einer der Generatoren für Ultraschallstehwelle, z.B. der Generator 5 des Aktors 3 von der elektrischen Erregervorrichtung 33 über den Umschalter 33 (siehe Fig. 5, 6) mit der elektrischen Erregerspannung U beaufschlagt.

Für ein Piezoelement, bei dem das Verhältnis UH etwa 1,5 beträgt, muss die Frequenz fₐₛ der elektrischen Spannung U gleich f₀₁ oder nahezu gleich dieser Frequenz sein (siehe Fig. 7). Dabei wird in dem Piezoelement 4 eine akustische Stehwelle erzeugt. Da der Generator 5 asymmetrisch bezogen auf die Symmetrieebene 28 (siehe Fig. 4) und symmetrisch bezogen auf die Längs-Symmetrieebene 18 angeordnet ist, ergibt sich durch dessen elektrische Anregung eine Stehwelle mit einer Form, die asymmetrisch bezogen auf die Symmetrieebene 28 und symmetrisch bezogen auf die Längs-Symmetrieebene 18 ist.

Die Form der erzeugten Welle bei maximaler Deformation wird anhand der Darstellungen 49 und 50 der Fig. 8 verdeutlicht. Diese Welle stellt eine teilzylindrische asymmetrische Stehwelle dar.

Das Auftreten einer Stehwelle mit dieser Form kann dadurch erklärt werden, dass diese Welle eine einzelne Form einer asymmetrischen Stehwelle darstellt, die der gegebenen Form des Piezoelementes 4, das auf seiner Eigenresonanzfrequenz f₀₁ angeregt wird, eigen ist. Durch die Erzeugung einer solchen Welle bewegen sich die auf der Umfangsstirnfläche 21 des Piezoelementes 4 liegenden Materialpunkte 52 auf den in Fig. 9 gezeigten linearen oder sehr in die Länge gezogenen elliptischen Bewegungsbahnen 51.

Für das Piezoelement 4, bei dem das Verhältnis UH etwa 9,2 beträgt, muss die Frequenz f_{lb} der elektrischen Spannung U gleich f₀₂ oder nahezu gleich dieser Frequenz sein (siehe Fig. 10). Dabei wird in dem Piezoelement 4 ebenfalls eine akustische Stehwelle generiert. Diese Welle ist das Ergebnis der Überlagerung der ersten Mode der teilzylindrischen symmetrischen Longitudinalstehwelle und der dritten Mode der teilzylindrischen symmetrischen Biege-Stehwelle. Beide Moden breiten sich entlang der Länge L des Piezoelementes 4 aus und schwingen in den nah zueinander liegen Resonanzstellen bei den Frequenzen f₀₂ und f₀₃. Die Lage dieser Frequenzen zueinander wird durch die geometrische Gestaltung des Piezoelementes 4, d.h. dem Verhältnis UH bestimmt.

Die Form der erzeugten Welle mit ihrer maximalen Deformation ist in den Darstellungen 53 und 54 der Fig. 10 veranschaulicht. Durch die Erzeugung einer solchen Welle bewegen sich die auf der Umfangsstirnfläche 21 des Piezoelementes 4 liegenden Materialpunkte 52 auf den in Abb. 12 gezeigten elliptischen Bewegungsbahnen 58.

Die Frequenzen fₐₛ und f_{lb} bilden die Arbeitsfrequenzen des erfindungsgemäßen Ultraschallmotors.

In beiden Fällen führt die Bewegung der Materialpunkte 52 auf den geneigten oder auf den elliptischen Bewegungsbahnen 51 und 58 zu einer Bewegung der Friktionselemente 7 (siehe Fig. 13) des Aktors 3 auf den gleichen Bewegungsbahnen. Dies führt zum Auftreten einer Bewegungskraft zwischen den Friktionselementen 7 und den Friktionsoberflächen 9 der Führungsschienen oder Platten 11. Die Bewegungskraft bewirkt die Bewegung des Aktors 3 relativ zur Friktionsoberfläche 9 oder die Bewegung der der Friktionsoberfläche 9 relativ zum Aktor 3. Dabei erfolgt die Bewegung längs zur Achse 17 des Piezoelementes 4.

Durch Betätigen des Umschalters 33 (siehe Fig. 5) in die Stellung, bei der der Generator 6 angeregt wird, erfolgt die Umkehr der Bewegungsrichtung.

Der Aktor des erfindungsgemäßen Ultraschallmotors kann verschiedene konstruktive Ausführungen für die Ultraschallwellengeneratoren 5 und 6, wie z.B. in Fig. 6 gezeigt, haben.

Die Darstellung 37 der Fig. 6 zeigt das Piezoelement 4 des Aktors 3 mit beidseitig angeordneten Elektroden 34 und 35 der Ultraschallwellengeneratoren 5 und 6. Dies ist die einfachste Konstruktion der Ultraschallwellengeneratoren 5 und 6. Bei den in Darstellung 38 gezeigten Ultraschallwellengeneratoren 5 und 6 sind die Elektroden 34 und 35 und die Ausgänge 30 und 31 einseitig angeordnet. Bei diesen Generatoren haben die Elektroden 30 und 31 einen großen Abstand zueinander, weshalb ein solcher Aktor eine erhöhte Erregerspannung benötigt. Durch die Verwendung von abwechselnd angeordneten streifenförmigen Elektroden 41 und 42 gemäß Darstellung 39 ist es möglich, die Erregerspannung abzusenken. Eine noch kleinere Erregerspannung ist möglich, wenn die Ultraschallwellengeneratoren die in Darstellung 40 der Fig. 6 gezeigte Vielschichtkonstruktion aufweisen.

Die in Fig. 13 und 14 dargestellten Aktoren 3 des erfindungsgemäßen Ultraschallmotors haben verschiedene konstruktive Ausführungen der Friktionselemente 7 und der Friktionsoberflächen 8. Durch Wahl der entsprechenden Form für das Friktionselement 7 oder für die Friktionsoberfläche 8 können sie mit den Führungen der Friktionsoberflächen 9 oder den Führungsschienen der Platten 11 in Deckung gebracht werden.

Die Darstellung 82 der Fig. 15 zeigt einen erfindungsgemäßen Ultraschallmotor, bei dem die Richtung der Bewegung des Aktors 3 durch die begrenzenden Ränder 135 vorgegeben ist, wodurch eine Führung der Bewegung erreicht wird. Die Darstellungen 83 und 84 der Fig. 15 zeigen weitere Ausführungsformen des erfindungsgemäßen Ultraschallmotors, bei denen die Führung der Bewegungsrichtung durch die geneigten Führungsschienen 11 erfolgt.

Die Darstellungen 85-90 der Fig. 16 zeigen erfindungsgemäße Ultraschallmotoren, bei denen sich die Führung der Bewegungsrichtung durch die Formen der Friktionselemente 7 und der Führungsschienen 11 ergibt.

Die Darstellungen 91-93 der Abb. 17 zeigen mögliche Ausführungsformen für eine Andrückvorrichtung 94, welche den Aktor 3 mit seinen Friktionselementen 7 oder Friktionsschichten 8 gegen die Friktionsoberflächen 9 der Führungsschienen oder Platten 11 drückt. Bei den in den Darstellungen 91 und 92 gezeigten Konstruktionen erfolgt das Anpressen mit Hilfe der Feder 95 bzw. der Federn 96. Die Enden der Federn werden durch die Lager 136 in der Halterung oder dem Motorgehäuse 12 fixiert. Bei der in Darstellung 93 gezeigten Andrückvorrichtung 94 erfolgt das Anpressen durch die Kraftwirkung des Magneten 97.

Die Darstellungen 98 und 99 der Fig. 18 zeigen Ultraschallmotoren, bei denen das Anpressen durch eine externe Kraft Fₚ erfolgt (Andrückvorrichtung nicht dargestellt). Durch die keilartige Querschnittsform der Führungsschiene 11 kommt es bei Aufbringen einer Kraft Fp in der in den Darstellungen 98 und 99 der Fig. 18 durch Pfeile angedeuteten Weise zu einem Verkeilen zwischen der Führungsschiene 11 und dem Aktor 3 in Form eines Teilhohlzylinders.

Bei den in den Darstellungen 100 bis 103 der Fig. 18 gezeigten Ausführungsformen des erfindungsgemäßen Ultraschallmotors erfolgt das Anpressen der Friktionsschichten 8 an die Friktionsoberflächen 9 durch die Elastizitätskraft Fₛ. Beim Zusammenbau der Motoren wird zwischen den Umfangsstirnflächen 21 die Führungsschiene 11 eingefügt, wobei entweder die Führungsschiene 11, oder aber der Aktor ein Übermaß aufweisen, so dass durch das Einfügen eine Einspannkraft, die von der Elastizität des Piezoelementes 4 herrührt, entsteht.

Die in den Fig. 19 und 20 dargestellten erfindungsgemäßen Ultraschallmotoren haben zwei gegenüberstehend angeordnete Aktoren 3. Diese Motoren sind zum Antrieb von ein oder zwei optischen Linsengruppen (in den Abb. 19, 20 nicht dargestellt) vorgesehen.

Die Fig. 21 bis 24 zeigen als Anwendungsbeispiele des erfindungsgemäßen Ultraschallmotors deren Verwendung in optischen Objektiven, die zur Fokussierung und Abbildung optischer Objekte auf einen elektrooptischen Sensor dienen (Objekt und Geber nicht dargestellt).

Bei dem in den Darstellungen 112, 117 und 121 der Fig. 125 und 126 dargestellten Aktor ist jeder der Ultraschallwellengeneratoren 5 und 6 axial in zwei gleiche Teile 119 und 120 getrennt. Durch eine solche Trennung ist es möglich, das Teil 119 (120) unabhängig vom Teil 120 (119) anzusteuern. Im Ergebnis dessen kann das Erregerniveau des Teils 119 (120) unabhängig vom Teil 120 (119) im Aktor 3 geändert werden. Dies ermöglicht es, unabhängig die Schwingungsamplitude der diagonal angeordneten Friktionselemente 7 anzusteuern. Die unabhängige Steuerung der Schwingungsamplitude der diagonal angeordneten Friktionselemente 7 macht es möglich, die Bewegungsrichtung des Aktors 3 zu regeln. Ein solcher Aktor kann sich auf der Führungsplatte 11 durch Änderung seiner Bewegungsrichtung bewegen, wie dies in Darstellung 121 der Fig. 26 gezeigt ist. Das Anpressen der Friktionselemente 7 eines solchen Aktors 3 an die Führungsplatte 11 kann beispielsweise mittels des Magneten 97 erfolgen (siehe Darstellung 123 der Fig. 26).

Die elektrische Erregervorrichtung 32 des Aktors 3 (siehe Fig. 27) arbeitet folgendermaßen: Beim Einschalten der Primärspannungsquelle (in den Fig. nicht dargestellt) entsteht in der Formierungseinrichtung 127 ein elektrischer Spannungsimpuls, der über den Ausschalter 125 auf den Leistungsverstärker gelangt, verstärkt wird und über den Ausgang 31 auf die allgemeine Elektrode 35 des Generators oder des Generators 6 des Aktors 3 gelangt. Durch den Aktor 3 fließt ein Impulsstrom. Der Aktor 3 beginnt auf seinen Resonanzfrequenzen zu schwingen. Im Ergebnis dessen erscheint am Rückkopplungselement 131 oder an der nicht angeschlossenen Elektrode 34 ein Rückkopplungssignal. Danach gelangt das Rückkopplungssignal auf den Eingang der Formierungseinrichtung 127 und wird durch sie verarbeitet. Bei Bedarf wird aus dem Rückkopplungssignal mit Hilfe des Filters die erste Harmonische herausgefiltert.

Es sind zumindest zwei Arbeitsweisen für die elektrische Erregervorrichtung 23 denkbar, die den Aufbau der Formierungseinrichtung 127 bestimmen. In der ersten Variante arbeitet sie wie ein selbsterregender Generator. In diesem Fall besteht die Formierungseinrichtung aus einem Phasenschieber und einem Verstärker. Das Rückkopplungssignal wird vom Rückkopplungssignalkreis 129 oder 130 abgenommen. Mit dem Phasenschieber wird die erforderliche Phase des Rückkopplungssignals und mit Hilfe des Verstärkers seine Amplitude eingestellt. Die Größe von Phase und Amplitude ergeben sich aus der Bedingung der Selbsterregung.

In der zweiten Variante arbeitet die Formierungseinrichtung wie ein PLL-Regler. In diesem Fall besteht die Formierungseinrichtung 127 zusätzlich aus einem Phasendetektor und einem spannungsgeführten Generator. Außerdem wird der Rückkopplungskreis 128 mit dem Referenzsignal verwendet. Das Basis- und Referenzsignal der Rückkopplung wird auf den Phasendetektor geleitet, dessen Ausgangssignal die Frequenz des spannungsgeführten Generators steuert.

In beiden Fällen schwingt die Vorrichtung auf der Frequenz fₐₛ oder f_{lb}, die durch die Phase des Rückkopplungssignals vorgegeben ist und automatisch bei Änderungen der Temperatur des Aktors 3 oder seiner mechanischen Last im optimalen Bereich gehalten wird.

Die elektrische Erregervorrichtung 23 des Aktors 3 mit den getrennten Ultraschallwellengeneratoren 5 und 6 arbeitet folgendermaßen. Vom entsprechenden Leistungsverstärker 124 wird die Erregerspannung U11, U12 oder U21, U22 an die Teile 113, 114 und 115, 116 der Ultraschallwellengeneratoren gelegt. Die Amplitude jeder der Erregerspannungen kann mit der Amplitudennachstimmeinrichtung 133, die dafür die einen entsprechenden Steuersignaleingänge besitzt, unabhängig geändert werden. Dies ermöglicht es, die Schwingungsamplitude der diagonal angeordneten Friktionselemente 7 unabhängig zu ändern, wodurch es möglich ist, die Bewegungsrichtung des Aktors 3 auf den Führungsplatten 11 so zu steuern, wie es in Darstellung 121 der Fig. 26 gezeigt ist. Ein solcher Aktor stellt einen Zweikoordinatenaktor dar, der auf der Friktionsoberfläche 9 durch Änderung der Bewegungsrichtung (Linie 122) verschoben wird.

## Patentansprüche

1. Ultraschallmotor (10), umfassend einen Ultraschallaktor (3), der ein Piezoelement (4) in Form eines Teilhohlzylinders mit Umfangsstirnflächen (21) aufweist, wobei die Umfangsstirnflächen (21) in Ebenen liegen, die parallel zur Längsachse (17) des Teilhohlzylinders verlaufen, und das Piezoelement (4) weiterhin eine senkrecht zur Längsachse (17) des Teilhohlzylinders verlaufende Symmetrieebene (28), eine mittlere Umfangslänge L und eine Höhe H entlang der Längsachse (17) besitzt, wobei das Verhältnis UH zwischen 1,3 und 1,8 oder zwischen 8,8 und 9,5 liegt, und der Ultraschallaktor (3) weiterhin zwei bezüglich der Symmetrieebene (28) symmetrisch angeordnete Generatoren (5, 6) für die Erzeugung einer Ultraschallwelle und an den Umfangsstirnflächen (21) angeordnete Friktionselemente (7) oder Friktionsschichten (8) umfasst, und der Ultraschallmotor (10) darüber hinaus eine elektrische Erregervorrichtung (32) zur elektrischen Anregung der Generatoren (5, 6) aufweist.

2. Ultraschallmotor nach Anspruch 1, **dadurch gekennzeichnet, dass** zumindest eine der Umfangsstirnflächen (21) wenigstens abschnittsweise in einer Ebene liegt, die durch die Längsachse (17) des Teilhohlzylinders verläuft und damit eine radiale Ausrichtung aufweist.

3. Ultraschallmotor nach zumindest einem der vorangegangenen Ansprüche, **dadurch gekennzeichnet, dass** der Teilhohlzylinder eine Längs-Symmetrieebene (18) aufweist, die entlang der Längsachse (17) des Teilhohlzylinders verläuft.

4. Ultraschallmotor nach zumindest einem der vorangegangenen Ansprüche, **dadurch gekennzeichnet, dass** zumindest eine der Umfangsstirnflächen (21) wenigstens abschnittsweise zu der Symmetrieebene (18) einen Winkel zwischen 0° und 135° einnimmt.

5. Ultraschallmotor nach zumindest einem der vorangegangenen Ansprüche, **dadurch gekennzeichnet, dass** jeder der Generatoren (5, 6) eine allgemeine Elektrode (35), eine Erregerelektrode (34) und eine zwischen der allgemeinen Elektrode (35) und der Erregerelektrode (34) angeordnete piezoelektrische Keramik umfasst, wobei die allgemeine Elektrode (35) und die Erregerefektrode (34) auf der inneren und/oder äußeren Umfangsfläche des Teilhohlzylinders angeordnet sind.

6. Ultraschallmotor nach zumindest einem der vorangegangenen Ansprüche, **dadurch gekennzeichnet, dass** jeder der Generatoren (5, 6) zwei Gruppen von abwechselnd angeordneten Streifenelektroden (41, 42) und dazwischen angeordneter piezoelektrischer Keramik umfasst, wobei die beiden Gruppen von abwechselnd angeordneten Streifenelektroden (41, 42) die allgemeine Elektrode (35) und die Erregerelektrode (34) bilden.

7. Ultraschallmotor nach zumindest einem der vorangegangenen Ansprüche, **dadurch gekennzeichnet, dass** jeder der Generatoren (5, 6) Schichten (44) der allgemeinen Elektrode (35) und Schichten (43) der Erregerelektrode (34) aufweist, die sich mit senkrecht zur Längsachse des Teilhohlzylinders angeordneten Schichten (45) aus Piezokeramik abwechseln.

8. Ultraschallmotor nach zumindest einem der vorangegangenen Ansprüche, **dadurch gekennzeichnet, dass** die elektrische Erregervorrichtung (32) einen Umschalter (33) für die Generatoren (5, 6) umfasst, der einen oder beide der Generatoren mit der Erregervorrichtung (32) zur elektrischen Anregung verbindet.

9. Ultraschallmotor nach zumindest einem der vorangegangenen Ansprüche, **dadurch gekennzeichnet, dass** jeder der Generatoren (5, 6) in Umfangsrichtung des Teilhohlzylinders in zwei Teile (119, 120) für deren unabhängige elektrische Anregung geteilt ist.

10. Ultraschallmotor nach zumindest einem der vorangegangenen Ansprüche, **dadurch gekennzeichnet, dass** jeder der Teile (119, 120) der Generatoren (5, 6) mit einem Leistungsverstärker (124) der elektrischen Erregervorrichtung (32) verbunden ist.

11. Ultraschallmotor nach zumindest einem der vorangegangenen Ansprüche, **dadurch gekennzeichnet, dass** die elektrische Erregervorrichtung (32) einen Rückkopplungskreis umfasst, mit dem die Erregerfrequenz des mit der Erregervorrichtung (32) verbundenen Generators (5, 6) optimal gehalten ist.

## Claims

1. An ultrasonic motor (10) comprising an ultrasonic actuator (3) having a piezoelectric element (4) in the shape of a partial hollow cylinder with circumferential end faces (21), said circumferential end faces (21) lying in planes running parallel to the longitudinal axis (17) of the partial hollow cylinder, and the piezoelectric element (4) further comprising a symmetry plane (28) running perpendicular to the longitudinal axis (17) of the partial hollow cylinder and having an average circumferential length L and a height H along the longitudinal axis (17), wherein the ratio L/H is from 1.3 to 1.8 or from 8.8 to 9.5, and the ultrasonic actuator (3) further including two generators (5, 6) for generating an ultrasonic wave being arranged symmetrically with respect to the symmetry plane (28) and friction elements (7) or friction layers (8) arranged at the circumferential end faces (21), and with the ultrasonic motor (10) further comprising an electrical excitation means (32) for electrical excitation of the generators (5, 6).

2. An ultrasonic motor according to claim 1, **characterized in that** at least one of the circumferential end faces (21) is at least partially lying in a plane running through the longitudinal axis (17) of the partial hollow cylinder, thus having a radial orientation.

3. An ultrasonic motor according to at least one of the preceding claims, **characterized in that** the partial hollow cylinder has a longitudinal plane of symmetry (18) running along the longitudinal axis (17) of the partial hollow cylinder.

4. An ultrasonic motor according to at least one of the preceding claims, **characterized in that** at least one of the circumferential end faces (21) has at least partially an angle to the plane of symmetry (18) of between 0° and 135°.

5. An ultrasonic motor according to at least one of the preceding claims, **characterized in that** each of the generators (5, 6) has a common electrode (35), an excitation electrode (34) and piezoelectric ceramic material arranged between the common electrode (35) and the excitation electrode (34), wherein the common electrode (35) and the excitation electrode (34) are arranged on the inner and/or outer circumferential surface of the partial hollow cylinder.

6. An ultrasonic motor according to at least one of the preceding claims, **characterized in that** each of the generators (5, 6) comprises two groups of alternately arranged strip electrodes (41, 42) with piezoelectric ceramic material being arranged between said two groups of alternately arranged strip electrodes (41, 42), and with the two groups of alternately arranged strip electrodes (41, 42) forming the common electrode (35) and the excitation electrode (34).

7. An ultrasonic motor according to at least one of the preceding claims, **characterized in that** each of the generators (5, 6) comprises layers (44) of the common electrode (35) and layers (43) of the excitation electrode (34), said layers (43, 44) alternating with layers (45) of piezoelectric ceramic material being arranged perpendicular to the longitudinal axis of the partial hollow cylinder.

8. An ultrasonic motor according to at least one of the preceding claims, **characterized in that** the electrical excitation means (32) comprises a switch (33) for the generators (5, 6), said switch (33) connecting one or both of the generators to the electrical excitation means (32) for electrical excitation.

9. An ultrasonic motor according to at least one of the preceding claims, **characterized in that** each of the generators (5, 6) is divided into two parts (119, 120) in the circumferential direction of the partial hollow cylinder, for the independent electrical excitation of said two parts (119, 120).

10. An ultrasonic motor according to at least one of the preceding claims, **characterized in that** each of the parts (119, 120) of the generators (5, 6) is connected to a power amplifier of the electrical excitation means (32).

11. An ultrasonic motor according to at least one of the preceding claims, **characterized in that** the electrical excitation means (32) comprises a feedback loop with which the excitation frequency of the generator (5, 6) connected to the electrical excitation means (32) is kept optimal.

## Revendications

1. Moteur à ultrasons (10) comprenant un actionneur à ultrasons (3), l'actionneur à ultrasons (3) comprenant un élément piézoélectrique (4) sous la forme d'un cylindre creux partiel avec des faces d'extrémité circonférentielle (21), lesdites faces d'extrémité circonférentielle (21) sont situés dans des plans s'étendant parallèlement à l'axe longitudinal (17) du cylindre creux partiel, et l'élément piézoélectrique (4) comprenant en outre un plan de symétrie (28) s'étendant perpendiculaire à l'axe longitudinal (17) du cylindre creux partiel, une moyenne longueur circonférentielle L et une hauteur H le long de l'axe longitudinal (17), et le rapport L/H est de 1,3 à 1,8 ou est de 8,8 à 9,5, et l'actionneur à ultrasons (3) comprenant en outre deux générateurs (5, 6) pour générer une onde ultrasonore disposés symétriquement par rapport au plan de symétrie (28) et des éléments de friction (7) ou des couches de friction (8) disposé au niveau des faces d'extrémité circonférentielle (21), et le moteur à ultrasons (10) comprenant en outre un moyen d'excitation électrique (32) pour l'excitation électrique des générateurs (5, 6).

2. Moteur à ultrasons selon la revendication 1, **caractérisé en ce qu'**au moins une des faces d'extrémité circonférentielle (21) est au moins partiellement situé dans un plan passant par l'axe longitudinal (17) du cylindre creux partiel et a donc une orientation radiale.

3. Moteur à ultrasons selon au moins l'une des revendications précédentes, **caractérisé en ce que** le cylindre creux partiel comprenant un plan de symétrie longitudinal (18) qui s'étend le long de l'axe longitudinal (17).

4. Moteur à ultrasons selon au moins l'une des revendications précédentes, **caractérisé en ce qu'**au moins une des faces d'extrémité circonférentielle (21) au moins partiellement par rapport au plan de symétrie (18) forme un angle compris entre 0° et 135°.

5. Moteur à ultrasons selon au moins l'une des revendications précédentes, **caractérisé en ce que** chacun des générateurs (5, 6) comprend une électrode générale (35), une électrode d'excitation (34) et une céramique piézoélectrique agencé entre l'électrode générale (35) et l'électrode d'excitation (34), et l'électrode commune (35) et l'électrode d'excitation (34) sont disposés sur la surface périphérique interne et/ou externe du cylindre creux partiel.

6. Moteur à ultrasons selon au moins l'une des revendications précédentes, **caractérisé en ce que** chacun des générateurs (5, 6) comprend deux groupes d'électrodes en bandes disposées en alternance (41, 42) et de céramique piézoélectrique placé entre ceux-ci, les deux groupes d'électrodes en bandes disposées en alternance (41, 42) formant l'électrode générale (35) et l'électrode d'excitation (34).

7. Moteur à ultrasons selon au moins l'une des revendications précédentes, **caractérisé en ce que** chacun des générateurs (5, 6) contient des couches (44) de l'électrode générale (35) et des couches (43) de l'électrode d'excitation (34), ces couches alternent avec des couches de céramique piézoélectrique agencées perpendiculaire à l'axe longitudinal du cylindre creux partiel.

8. Moteur à ultrasons selon au moins l'une des revendications précédentes, **caractérisé en ce que** le moyen d'excitation électrique (32) comprend un commutateur (33) pour les générateurs (5, 6) reliant une ou tous deux des générateurs avec le moyen d'excitation électrique (32) pour l'excitation électrique.

9. Moteur à ultrasons selon au moins l'une des revendications précédentes, **caractérisé en ce que** chacun des générateurs (5, 6) dans la direction circonférentielle du cylindre creux partiel est divisé en deux parties (119, 120) pour leurs l'excitation électrique indépendant.

10. Moteur à ultrasons selon au moins l'une des revendications précédentes, **caractérisé en ce que** chacune des parties (119, 120) des générateurs (5, 6) est reliée avec un amplificateur de puissance (124) de moyen d'excitation électrique (32).

11. Moteur à ultrasons selon au moins l'une des revendications précédentes, **caractérisé en ce que** le moyen d'excitation électrique (32) comprend un circuit de contre-réaction avec lequel la fréquence d'excitation du générateur (5, 6) connecté au moyen d'excitation électrique (32) est maintenue optimale.
